# EUROPEAN PATENT SPECIFICATION

(11) **EP 3 508 264 B1**
(45) Date of publication and mention of the grant of the patent: **29.09.2021**
(21) Application number: 19150032.1
(22) Date of filing: 02.01.2019
(51) Int. Cl.: B01D 39/16, B01D 39/20

(54) **WATER FILTER COMPONENT WITH DOUBLE LAYER PLEATED MEDIA FOR WATER PURIFIER CARTRIDGE SEALED WITH END CAPS AND METHOD OF MANUFACTURING**
WASSERFILTERKOMPONENTE MIT DOPPELLAGIGEN GEFALTETEN MEDIEN FÜR WASSERREINIGERPATRONE MIT ENDKAPPENDICHTUNG UND HERSTELLUNGSVERFAHREN
COMPOSANT DE FILTRE À EAU AVEC MÉDIA PLISSÉ DOUBLE COUCHE POUR CARTOUCHE DE PURIFICATION D'EAU POURVU DES FERMETURES PAR CAPUCHON D'EXTREMITÉ ET PROCÉDÉ DE FABRICATION

(30) Priority: 03.01.2018 US 201815861527
(43) Date of publication of application: 10.07.2019
(73) Proprietor: Goodrich Corporation, Charlotte, NC 28217-4578 (US)
(72) Inventor: HU, Jin, Hudson, OH 44236 (US); SLANE, Casey, Richwood, OH 43344 (US)
(74) Representative: Dehns

(56) References cited:
- EP-A1- 2 392 395
- EP-A1- 2 801 400
- WO-A1-2011/162854

## Description

### BACKGROUND

This application relates to a water filter component suitable for water purification systems, and specifically for pathogen-neutralizing water purifiers. The application also relates to a method of making said water filter component.

Water filtration systems are used frequently on aircraft and other vehicles to ensure fresh water is available. There is market push to use more efficient microbiological water purifier type filters for better water quality. Dual-ply filters, such as the filter disclosed in US Patent No. US 8,678,201 B2, use pathogen-catching media plies in conjunction with pathogen-killing plies to create water filters with longer operation lifespans and higher efficiency pathogen filtration. However, water purifiers that use a single media layer are more likely to have leaks and joint failure where the media layers are joined with caps used in water purifier design. This creates premature failure of water purifiers and leakage of pathogens, decreasing lifetimes of purifiers.

### SUMMARY

A water filter component is described in claim 1.

A method of making said water filter component is described in claim 8.

### BRIEF DESCRIPTION OF THE DRAWINGS

FIG. 1 is a schematic diagram depicting a water purifier system for use on aircraft.
FIG. 2 is a schematic diagram of a water purifier with a double layer pleated media.
FIGS. 3A-3G are schematic drawings of a method of making a water purifier with a double layer pleated media.
FIG. 4 is a schematic drawing of cross section of a water purifier.

### DETAILED DESCRIPTION

Water purifiers are prone to leaks and thermal stresses. The use of a double layer pleated media material allows for a more durable design with higher surface area and lower joint leakage. Typically, filter media that is a single layer with pleats has significant problems with pathogen leakage around joints in the water filter cartridge, such as where the caps meet the filter media. Additionally, single layer filter media tends to bend, twist, and break under the force of water. A double layer, pleated sheet media can create a better seal with a filter cap and is stronger and more resistant to bending, twisting, or breaking.

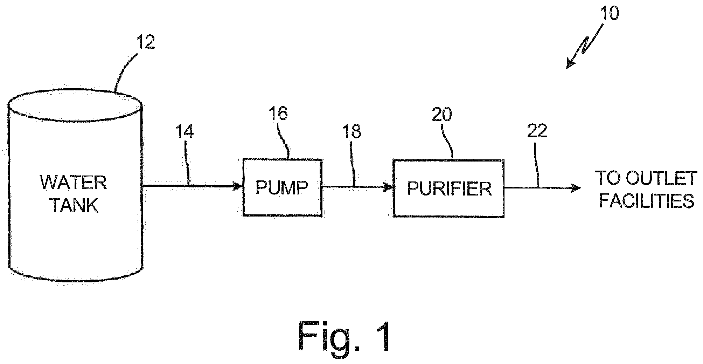

FIG. 1 is a schematic diagram depicting water purifier system 10 for use on aircraft. System 10 can be a potable water system for use in a vehicle. System 10 includes water tank 12, water tank line 14, pump 16, pump line 18, water purifier or filter 20, and output line 22. System 10 can be, for example, a water purifier system that reaches standard 99.9999% bacteria reduction, 99.99% virus reduction, and 99.95% cyst reduction, but alternatively can be a filter system that does not reach these purifier standards but still accomplishes significant particle reduction.

Water tank 12 stores water needing to be filtered or purified. Pump 16 pumps water from tank 12 along water tank line 14 to pump line 18, and to water filter 20. In water filter 20, water is purified of pathogens. Once purified, water is flowed through output line 22 for use elsewhere in the aircraft. System 10 can optionally include more water tanks, pumps, valves, or other lines between water tank 12 and water filter 20. System 10 can also include other types of filters, such as particulate filters, upstream of water filter 20.

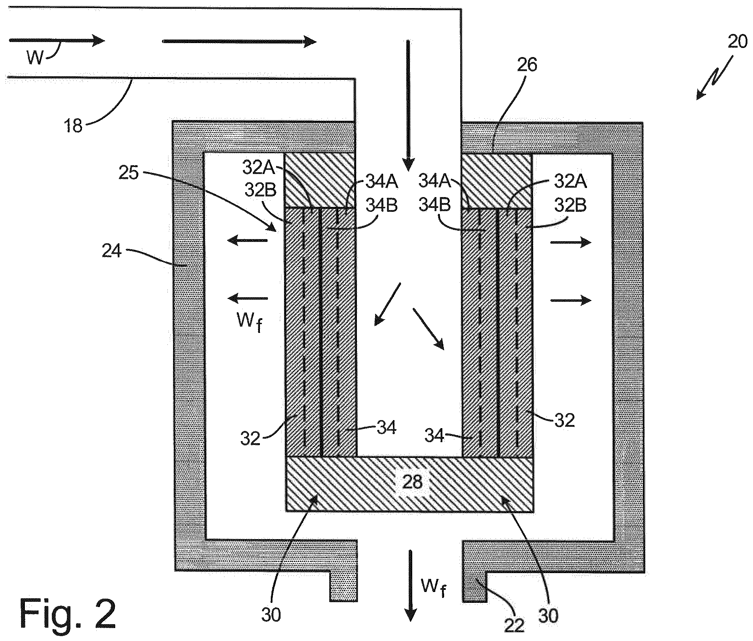

FIG. 2 is a schematic diagram of water purifier 20 with double layer pleated media 30. Water purifier 20 includes housing 24 and cartridge 25. Cartridge 25 includes first cap 26, second cap 28, and pleated double media 30, which includes first layer 32 and second layer 34. Each layer 32, 34, contains two plies 32A, 32B or 34A, 34B.

Housing 24 encloses cartridge 25, and housing 24 is connected to pump line 18, which inputs water W into purifier 20, and output line 22, which directs filtered water W_{f} to other uses. Housing 24 is connected to both incoming pump line 18 and cap 26. Housing 24 receives unfiltered water W from pump line 18.

Cartridge 25 includes first cap 26, second cap 28, and pleated double media 30, which includes first layer 32 and second layer 34. In the embodiment of FIG. 2, First and second caps 26, 28, are thermoplastic caps which seal and encapsulate cartridge 25. First and second caps 26, 28, are circular in shape and seal to cylindrical media 30. In FIG. 2, cap 26 protrudes from cartridge 25 to provide access to pump line 18 and incoming water (W) that needs to be filtered. Cap 28, in contrast, is solid and seals a bottom end of cartridge 25. Water (W) runs from pump line 18 through housing 24 and cap 28 into cartridge 25.

Caps 26, 28 can, for example, be sealed to media 30 through thermal welding. Thermal welding includes heating caps 26, 28 to a high temperature such that the thermoplastic material of caps 26, 28 softens enough (but does not melt) so that media 30 can be inserted into caps 26, 28 as caps 26, 28 cool. This locks caps 26, 28 to media 30 in cartridge 25 creating a seal. Alternatively, various adhesives can accomplish a similar seal. For example, a hot melt adhesive placed into cap 26 or 28 can be used to join media 30 to the caps.

Media 30 is a cylindrical shaped pleated double media that both catches and kills pathogens. Media 30 contains first layer 32 and second layer 34. Each layer 32, 34, is a stiff material. First layer 32 and second layer 34 are overlaid, but not bonded to each other. Instead, first layer 32 and second layer 34 are pleated together. The double pleated layer of media 30 creates a more rigid cylindrical structure that does not twist or bend with water flow through filter 20. The two layers 32, 34 in media 30 allow for closer packing of media 30 in filter 20 and prevents slipping of media 30 once installed.

Each layer 32, 34 is made of two plies. First layer 32 has first ply 32A and second ply 32B. First ply 32A is made of a pathogen killing media, such as biocidal material. A biocide is a chemical substance or microorganism which can deter, render harmless, or exert a controlling effect on any harmful organism by chemical or biological means. Biocides can be added to liquids to protect them against biological infestation and growth. The biocides are preloaded into first ply 32A. The biocides can be, for example, sodium dichloro-s-triazinetrione (dihydrate or anhydrous; "dichlor"), trichloro-s-triazinetrione ("trichlor"), halogenated hydantoin compounds, nanoparticles of copper and its alloys (e.g., brasses, bronzes, cupronickel, copper-nickel-zinc, etc.), silver nanoparticles and its derivativesor, quaternary ammonium compounds, and silica nanoparticles chemically bound with silyl quaternary amine.

Second ply 32B is made of a pathogen catching media. Pathogen-catching ply 34 is made of a pathogen-catching medium. Typically, pathogen-catching ply 34 can be alumina or glass fiber fabric optionally with an activated carbon component, or other electropositive or electroadsorptive material that can catch pathogens in water W. An electropositive material can include, for example, pseudoboehmite AIO(OH), or alumina. Alumina particles are electroadsorptive, and are able to catch pathogen particles via the inherent charge field extending across the void volume of the pores of glass fiber fabric. The pathogen-catching ply can alternatively be size exclusion capability of microfiltration (MF) or ultrafiltration (UF) membranes or nanofiltration (NF), or electroadsorptive media. First layer 32 is pleated to increase the surface are through which water can be filtered.

Similarly, second layer 34 contains first ply 34A and second ply 34B. First ply 34A is a pathogen killing media, while second ply 34B is a pathogen catching media. Second layer 34 is also pleated. First layer 32 and second layer 34 can be pleated together. The number and frequency of pleats is dependent on the size of cartridge 25 and the diameter of caps 26, 28. The pleats can be vertical or horizontal, depending on system needs. The double layer allows for less pathogen leakage at the joint between caps 28, 26 and media 30, as there is a redundant joint or barrier that is more stable than joints with single-layer filter media.

In cartridge 25 of purifier 20, water flows in the direction of arrows W, entering from pump line 18 (also shown in FIG. 1). When water enters purifier 20, it passes through cap 26 into the body of cartridge 25 which is cylindrical in shape. To exit cartridge 25, water must flow through media 30. When water flows through media 30, pathogens are killed or caught and do not flow outside of media 30. Filtered (purified) water W_{f} flows out of the cylindrical section to output line 22, and is used elsewhere. Alternatively, water in purifier 20 can flow in the reverse direction, depending on system needs. In such an embodiment, water would enter through line 22, flow through filter media 30, and exit through cap 26 into line 18.

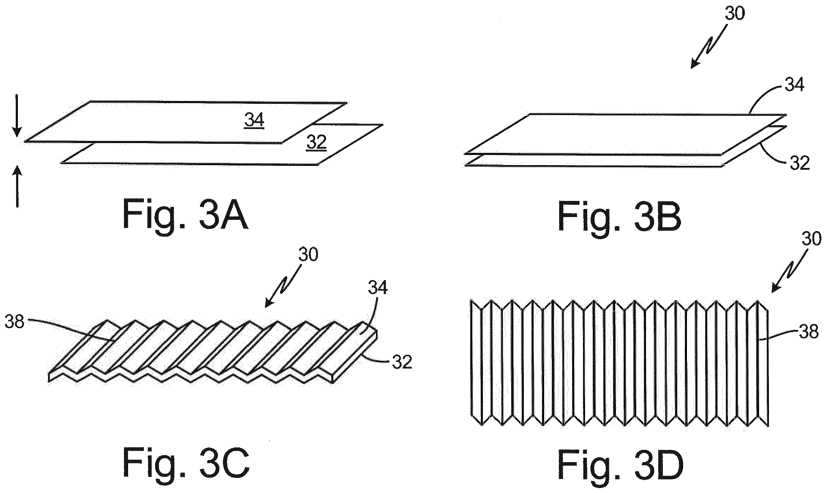

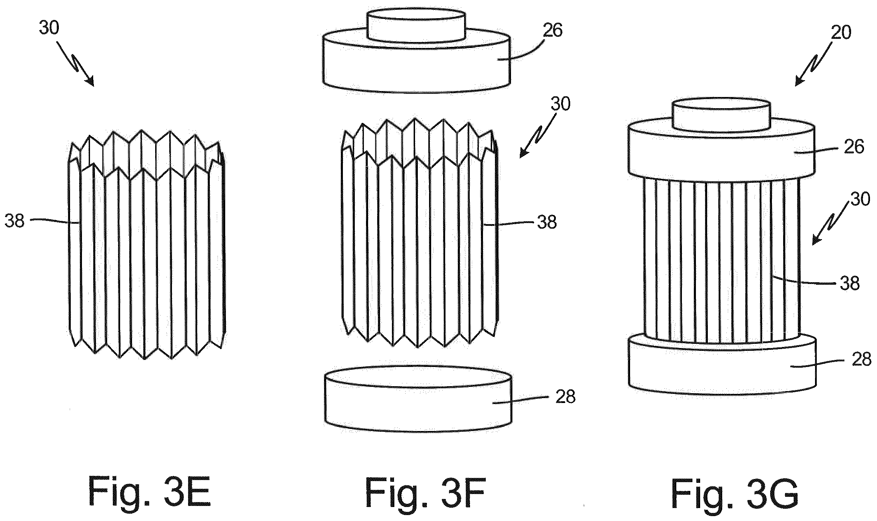

FIGS. 3A-3G are schematic drawings of a method of making water purifier 20 with double layer pleated media 30. Similar to FIG. 2, water purifier 20 includes first cap 26, second cap 28, and pleated double media 30, which includes first layer 32 and second layer 34.

In FIG. 3A, first layer 32 and second layer 34 are pressed together. First layer 32 contains first ply 32A, which is made of a pathogen killing media, such as biocidal material, and second ply 32B, which is made of a pathogen catching media, such as electropositive material. Plies 32A, 32B can attached to each other with an adhesive or other means known to the industry. Adhered plies 32A, 32B make first layer 32, shown in FIG. 3A. Second layer 34 likewise contains first ply 34A (a pathogen catching media) and second ply 34B (a pathogen killing material), shown in FIG. 3A. First layer 32 or second layer 34 can each include additional plies as desired. For instance, chemical catching or dirt catching plies can be included, or additional pathogen capturing/killing plies can be included in each layer 32, 34. Layers 32, 34 are overlaid so that they align prior to being pleated. Once assembled, layers 32, 34 are not adhered to each other with an adhesive.

In FIGS. 3C-3D, layers 32 and 34 are pleated together. Media 30 (including pleated layers 32, 34) can be pleated by folding or pressing. The number and frequency of pleats is dependent on the size of cartridge 25 and the diameter of caps 26, 28. Pleats 38 can be vertical or horizontal depending on system needs. Pleats 38 increase the surface area of media 30 when it is installed into cartridge 25, allowing more extensive neutralization of pathogens in water.

In FIG. 3E, media 30 is rolled into a cylindrical shape. Two opposing edges of media 30 are joined together, with an adhesive or other sealing means. As a pleated cylinder, media 30 has open ends. A cap 26, 28, is installed on each end to complete cartridge 25. Cap 26, 28, can be attached to media 30 through an adhesive, or through a heat seal if the cap is meltable, such as a thermoplastic material. For instance, cap 26 can be softened with heat, so that the thermoplastic material of cap 26 is soft enough to insert media 30. When cylindrical pleated media 30 (including layers 32, 34) is inserted into a melted or softened cap 26, media 30 can be pushed into cap 26. After insertion, cap 26 can be re-hardened, creating a joint between media 30 and cap 26. Because media 30 contains two layers, 32 and 34, each layer is sealed to cap 26, creating a double seal with cap 26. This seal at the joint of cap 26 and layers 32, 34, prevents pathogens leaking around cartridge 25. The completed cartridge 25 can be installed in a system such as system 10 in FIG. 1.

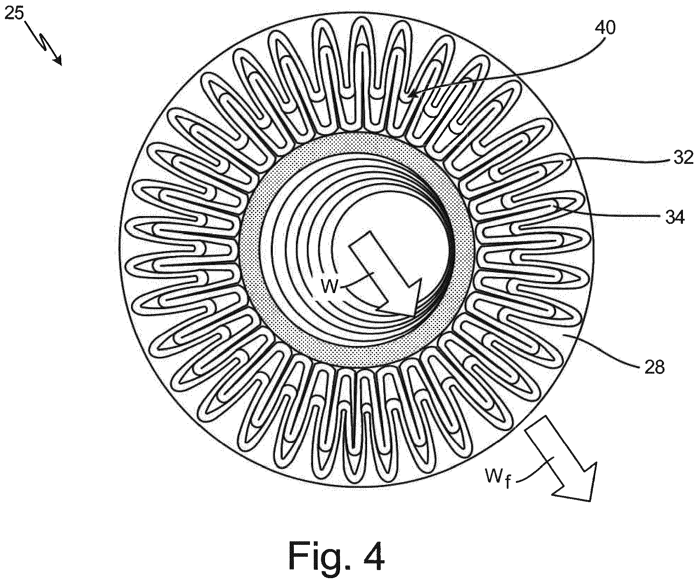

FIG. 4 is a schematic drawing of cross section of water purifier cartridge 25 made in FIGS. 3A-3G. Water purifier cartridge 25 includes cap 28, first layer 32, second layer 34, and seam 40. First layer 32 and second layer 34 are pleated together, and sealed by seam 40 to create a cylinder. Water W flows into the middle of water purifier cartridge 25 through the cylinder from an inlet (shown in FIG. 2), and then flows through first layer 32 and second layer 34 outside the cartridge as filtered water W_{f}. These components are described in greater detail with reference to FIG. 2 and FIGS. 3A-3G.

The use of a double layer pleated media sheet with a cap allows for longer water purifier lifetime by creating a stronger seal between filter media and a thermoplastic filter cap. The double plies are resistant to thermal shock compared to single-ply versions. Additionally, sealing the double layer media to a cap allows for stronger joints between cartridge media and a cap, and prevents pathogen joint leakage common in water purifiers.

It is intended that the invention not be limited to the particular embodiment(s) disclosed, but that the invention will include all embodiments falling within the scope of the appended claims.

## Claims

1. A water filter component comprises:
a double layer pleated filter media (30) that is cylindrical having a first end and a second end, the double layer pleated filter media comprising:
a first media layer (32) comprising a pathogen killing ply (32A) and a pathogen catching ply (32B); and
a second media layer (34) comprising pathogen killing ply (34A) and a pathogen catching ply (34B), wherein the second media layer overlays the first media layer (32) such that the first media layer (32) and the second media layer (34) are pleated together without bonding to form the double layer pleated filter media (30);
a first cap (26) sealingly engaged to the first end of the double layer pleated filter media; and
a second cap (28) sealingly engaged to the second end of the double layer pleated filter media, the first cap and second cap configured to prevent leakage.

2. The water filter component of claim 1, wherein each of the pathogen catching plies comprises an electropositive material, and preferably wherein the electropositive material is selected from the group consisting of pseudoboehmite, alumina, glass fiber fabric, and activated carbon.

3. The water filter component of claims 1 or 2, wherein each of the pathogen killing plies comprises a biocidal material selected from the group consisting of sodium dichloro-s-triazinetrione, trichloro-s-triazinetrione, halogenated hydantoin compounds, quaternary ammonium compounds, copper, copper alloys, silver, silver nanoparticles, and silver derivatives.

4. The water filter component of any preceding claim, wherein the pleated filter media (30) is formed into a column.

5. The water filter component of any preceding claim, wherein the pleated filter media (30) has an outer diameter and an inner diameter, and preferably wherein the plurality of pleats have heights of approximately the outer diameter minus the inner diameter.

6. The water filter component of any preceding claim, wherein the first cap (26) is a thermoplastic cap.

7. The water filter component of any preceding claim, wherein the second cap (28) is a thermoplastic cap.

8. A method of making a water filter component as claimed in any of claims 1 to 7 comprising:
overlaying a first multi-ply media layer and a second multi-ply media layer to create a double layer filter media;
pleating the filter media such that the first multi-ply media layer and second multi-ply media layer are pleated together to form a double layer pleated filter media;
sealing the double layer pleated filter media into a stacked media column such that a first cap sealingly engages a first end of the double layer pleated filter media and a second cap sealingly engages a second end of the double layer pleated filter media and
inserting the stacked media into the caps.

9. The method of claim 8, wherein pleating the filter media comprises folding vertical pleats in the filter media.

10. The method of claims 8 or 9, wherein each of the first multi-ply layer and the second multi-ply layer is made by laminating the pathogen-killing ply and the pathogen-catching ply; and/or
wherein the pathogen-catching ply comprises an electropositive material; and/or wherein the pathogen-killing ply comprises a biocidal material.

11. The method of any of claims 8-10, wherein sealing the filter media comprises melting the filter media into a column.

12. The method of claims 8-11, wherein inserting the filter media comprises using an adhesive to bind the media layer to one or both of the first cap and the second cap.

13. The method of any of claims 8-12, wherein inserting the filter media comprises heat sealing the media layer to one or more of the first cap and the second cap.

## Patentansprüche

1. Wasserfilterkomponente, umfassend:
ein doppelschichtiges plissiertes Filtermedium (30), welches zylindrisch ist und ein erstes Ende und ein zweites Ende aufweist, wobei das doppelschichtige plissierte Filtermedium Folgendes umfasst:
eine erste Mediumsschicht (32), welche eine pathogenabtötende Lage (32A) und eine pathogenfangende Lage (32B) umfasst; und
eine zweite Mediumsschicht (34), welches eine pathogenabtötende Lage (34A) und eine pathogenfangenden Lage (34B) umfasst, wobei die erste Mediumsschicht die zweite Mediumsschicht (32) überlagert, so dass die erste Mediumsschicht (32) und die zweite Mediumsschicht (34) zusammenplissiert sind, ohne sich zu verbinden, um ein doppelschichtiges plissiertes Filtermedium (30) zu bilden;
eine erste Kappe (26), welche abdichtend in das erste Ende des doppelschichtigen plissierten Filtermediums eingreift; und
eine zweite Kappe (28), welche abdichtend in das zweite Ende des doppelschichtigen plissierten Filtermediums eingreift, wobei die erste Kappe und die zweite Kappe dazu konfiguriert sind, ein Auslaufen zu vermeiden.

2. Wasserfilterkomponente nach Anspruch 1, wobei jede der pathogenfangenden Lagen ein elektropositives Material umfasst, und vorzugsweise wobei das elektropositive Material ausgewählt ist aus der Gruppe bestehend aus Pseudo-Böhmit, Aluminiumoxid, Glasfasergewebe und Aktivkohle.

3. Wasserfilterkomponente nach Anspruch 1 oder 2, wobei jede pathogenabtötende Lage ein biozides Material umfasst, welches ausgewählt ist aus der Gruppe bestehend aus Natrium Dichlor-s-triazintrion, trichchlor-s-triazintrion, halogenierten Hydantoin-Verbindungen, quaternären Ammonium-Verbindungen, Kupfer, Kupferlegierungen, Silber, Silbernanopartikeln und Silberderivaten.

4. Wasserfilterkomponente nach einem der vorstehenden Ansprüche, wobei das plissierten Filtermedium (30) in eine Säule gebildet ist.

5. Wasserfilterkomponente nach einem der vorstehenden Ansprüche, wobei das plissierte Filtermedium (30) einen äußeren Durchmesser und einen inneren Durchmesser aufweist, und vorzugsweise wobei die Vielzahl von Plissierungen Höhen aufweist, welche ungefähr den äußeren Durchmesser minus den inneren Durchmesser betragen.

6. Wasserfilterkomponente nach einem der vorstehenden Ansprüche, wobei die erste Kappe (26) eine thermoplastische Kappe ist.

7. Wasserfilterkomponente nach einem der vorstehenden Ansprüche, wobei die zweite Kappe (28) eine thermoplastische Kappe ist.

8. Verfahren zum Herstellen einer Wasserfilterkomponente nach einem der vorstehenden Ansprüche 1 bis 7, wobei das Verfahren Folgendes umfasst:
Überlagern einer ersten mehrlagigen Mediumsschicht und einer zweiten mehrlagigen Mediumsschicht, um ein doppelschichtiges Filtermedium zu erzeugen;
Plissieren des Filtermediums, so dass die erste mehrlagige Mediumsschicht und die zweite mehrlagige Mediumsschicht zusammenplissiert sind, um ein doppelschichtiges plissiertes Filtermedium zu bilden;
Abdichten des doppelschichtigen plissierten Filtermediums in eine gestapelte Mediumssäule, so dass eine erste Kappe abdichtend in ein erstes Ende des doppelschichtigen plissierten Filtermediums eingreift und eine zweite Kappe abdichtend in ein zweites Ende des doppelschichtigen plissierten Filtermediums eingreift und Einfügen des gestapelten Mediums in die Kappen.

9. Verfahren nach Anspruch 8, wobei ein Plissieren des Filtermediums ein Falten von vertikalen Plissierungen in dem Filtermedium umfasst.

10. Verfahren nach Anspruch 8 oder 9, wobei jede der ersten mehrlagigen Schicht und der zweiten mehrlagigen Schicht durch ein Laminieren der pathogenabtötenden Lage und der pathogenfangenden Lage hergestellt ist; und/oder
wobei die pathogenfangende Lage ein elektropositives Material umfasst; und/oder wobei die pathogenabtötende Lage ein biozides Material umfasst.

11. Verfahren nach einem der Ansprüche 8-10, wobei ein Abdichten des Filtermediums ein Schmelzen des Filtermediums in eine Säule umfasst.

12. Verfahren nach Anspruch 8-11, wobei ein Einfügen des Filtermediums ein Verwenden eines Haftmittels umfasst, um die Mediumsschichten an eine oder beide der ersten Kappe und der zweiten Kappe zu binden.

13. Verfahren nach einem der Ansprüche 8-12, wobei ein Einfügen des Filtermediums ein Wärmeabdichten der Mediumsschicht an eine oder mehrere der erste und der zweiten Kappe umfasst.

## Revendications

1. Composant de filtre à eau comprend :
un milieu filtrant plissé à double couche (30) qui est cylindrique ayant une première extrémité et une seconde extrémité, le milieu filtrant plissé à double couche comprenant :
une première couche de milieu (32) comprenant un pli d'élimination d'agents pathogènes (32A) et un pli de capture d'agents pathogènes (32B) ; et
une seconde couche de milieu (34) comprenant un pli d'élimination d'agents pathogènes (34A) et un pli de capture d'agents pathogènes (34B), dans lequel la seconde couche de milieu est superposée à la première couche de milieu (32) de sorte que la première couche de milieu (32) et la seconde couche de milieu (34) soient plissées ensemble sans liaison pour former le milieu filtrant plissé à double couche (30) ;
un premier bouchon (26) mis en prise de manière étanche avec la première extrémité du milieu filtrant plissé à double couche ; et
un second bouchon (28) mis en prise de manière étanche avec la seconde extrémité du milieu filtrant plissé à double couche, le premier bouchon et le second bouchon étant configurés pour empêcher les fuites.

2. Composant de filtre à eau selon la revendication 1, dans lequel chacun des plis de capture d'agents pathogènes comprend un matériau électropositif, et de préférence dans lequel le matériau électropositif est sélectionné dans le groupe constitué de la pseudoboéhmite, l'alumine, un tissu en fibre de verre et le charbon actif.

3. Composant de filtre à eau selon les revendications 1 ou 2, dans lequel chacun des plis d'élimination d'agents pathogènes comprend un matériau biocide sélectionné dans le groupe constitué de la dichloro-s-triazinetrione de sodium, la trichloro-s-triazinetrione, des composés d'hydantoïne halogénée, des composés d'ammonium quaternaire, le cuivre, des alliages de cuivre, l'argent, des nanoparticules d'argent et des dérivés d'argent.

4. Composant de filtre à eau selon une quelconque revendication précédente, dans lequel le milieu filtrant plissé (30) est formé en une colonne.

5. Composant de filtre à eau selon une quelconque revendication précédente, dans lequel le milieu filtrant plissé (30) a un diamètre extérieur et un diamètre intérieur, et de préférence dans lequel la pluralité de replis ont des hauteurs correspondant approximativement au diamètre extérieur moins le diamètre intérieur.

6. Composant de filtre à eau selon une quelconque revendication précédente, dans lequel le premier bouchon (26) est un bouchon thermoplastique.

7. Composant de filtre à eau selon une quelconque revendication précédente, dans lequel le second bouchon (28) est un bouchon thermoplastique.

8. Procédé de fabrication d'un composant de filtre à eau selon l'une quelconque des revendications 1 à 7, comprenant :
la superposition d'une première couche de milieu multiplis et d'une seconde couche de milieu multiplis pour créer un milieu filtrant à double couche ;
le plissage du milieu filtrant de sorte que la première couche de milieu multiplis et la seconde couche de milieu multiplis soient plissées ensemble pour former un milieu filtrant plissé à double couche ;
le scellement du milieu filtrant plissé à double couche dans une colonne de milieu empilé de sorte qu'un premier bouchon soit mis en prise de manière étanche avec une première extrémité du milieu filtrant plissé à double couche et qu'un second bouchon soit mis en prise de manière étanche avec une seconde extrémité du milieu filtrant plissé à double couche et l'insertion du milieu empilé dans les bouchons.

9. Procédé selon la revendication 8, dans lequel le plissage du milieu filtrant comprend le pliage de replis verticaux dans le milieu filtrant.

10. Procédé selon la revendication 8 ou 9, dans lequel chacune de la première couche multiplis et de la seconde couche multiplis est réalisée par stratification du pli d'élimination d'agents pathogènes et du pli de capture d'agents pathogènes ; et/ou
dans lequel le pli de capture d'agents pathogènes comprend un matériau électropositif ; et/ou dans lequel le pli d'élimination d'agents pathogènes comprend un matériau biocide.

11. Procédé selon l'une quelconque des revendications 8 à 10, dans lequel le scellement du milieu filtrant comprend la fusion du milieu filtrant en une colonne.

12. Procédé selon les revendications 8 à 11, dans lequel l'insertion du milieu filtrant comprend l'utilisation d'un adhésif pour lier la couche de milieu à l'un ou aux deux du premier bouchon et du second bouchon.

13. Procédé selon l'une quelconque des revendications 8 à 12, dans lequel l'insertion du milieu filtrant comprend le thermoscellage de la couche de milieu à un ou plusieurs du premier bouchon et du second bouchon.
